(19) Europäisches Patentamt
European Patent Office
Office européen des brevets

(11) **EP 3 365 210 B1**

(12) **EUROPÄISCHE PATENTSCHRIFT**

(45) Veröffentlichungstag und Bekanntmachung des Hinweises auf die Patenterteilung:
**11.12.2019 Patentblatt 2019/50**

(21) Anmeldenummer: **16765955.6**

(22) Anmeldetag: **09.09.2016**

(51) Int Cl.:
*B60W 20/10* *(2016.01)*        *B60W 10/06* *(2006.01)*
*B60W 10/08* *(2006.01)*        *B60K 6/48* *(2007.10)*
*B60W 30/188* *(2012.01)*      *B60W 50/00* *(2006.01)*

(86) Internationale Anmeldenummer:
**PCT/EP2016/071302**

(87) Internationale Veröffentlichungsnummer:
**WO 2017/067703 (27.04.2017 Gazette 2017/17)**

(54) **STEUERVORRICHTUNG, ANTRIEBSSTRANG UND VERFAHREN**

CONTROL DEVICE, DRIVE TRAIN AND METHOD

DISPOSITIF DE COMMANDE, CHAÎNE CINÉMATIQUE ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2015 DE 102015220275**

(43) Veröffentlichungstag der Anmeldung:
**29.08.2018 Patentblatt 2018/35**

(73) Patentinhaber: **Robert Bosch GmbH**
**70442 Stuttgart (DE)**

(72) Erfinder:
• **HUBER, Alexander**
**70174 Stuttgart (DE)**
• **BANDI, Rajendra Prasad**
**Bangalore 560029 (IN)**
• **BIESTER, Juergen**
**71034 Boeblingen (DE)**
• **GREIS, Andreas**
**70192 Stuttgart (DE)**

(56) Entgegenhaltungen:
DE-A1-102010 008 695      GB-A- 2 500 944
US-A1- 2005 246 076

## Beschreibung

Die vorliegende Erfindung bezieht sich auf eine Steuervorrichtung für ein Fahrzeug mit mindestens zwei Antriebseinheiten. Ferner bezieht sich die vorliegende Erfindung auf einen entsprechenden Antriebsstrang und ein entsprechendes Verfahren.

Stand der Technik

In modernen Fahrzeugen werden unterschiedliche Techniken zum Reduzieren des Kraftstoffverbrauchs eingesetzt. Beispielsweise wird versucht das Gewicht der Fahrzeuge zu senken, um deren Verbrauch zu reduzieren. Neben einer solchen Gewichtsreduktion werden in modernen Fahrzeugen auch zwei Antriebsmotoren eingesetzt, die sich gegenseitig ergänzen sollen. Beispielsweise kann ein Elektromotor sehr effizient eingesetzt werden, um ein Fahrzeug aus dem Stillstand zu beschleunigen, da er bereits ab einer Drehzahl von null sein maximales Drehmoment entfalten kann. Ein Verbrennungsmotor kann dagegen für sehr lange Strecken eingesetzt werden, da die Energiedichte von Benzin oder Diesel sehr hoch ist.

Fahrzeuge, die einen Verbrennungsmotor und einen Elektromotor aufweisen, werden auch Hybridfahrzeuge genannt. Eine wichtige Komponente solcher Fahrzeuge ist eine Steuerung, die die Drehmomentverteilung zwischen dem Elektromotor und dem Verbrennungsmotor steuert. Die also steuert, welcher Motor wieviel Drehmoment an die Räder des Fahrzeugs abgibt.

Die DE 10 2012 214 252 A1 offenbart ein entsprechendes Fahrzeug und ein Verfahren zum Steuern eines Hybridfahrzeugs.

Die Druckschrift US 2005/246076 A1 offenbart einen Algorithmus für das Drehmoment-Management einem Hybrid-Fahrzeug zur Optimierung des Kraftstoffverbrauchs und des Batteriezustandes.

Die Druckschrift DE 10 2010 008 695 A1 offenbart ein Steuergerät und ein Verfahren zur Steuerung eines Betriebspunktes eines Hybridfahrzeugs.

Die Druckschrift GB 2500944 A offenbart ein Energiemanagementsystem für eine Seriens-Hybridfahrzeug.

Offenbarung der Erfindung

Die vorliegende Erfindung offenbart eine Steuervorrichtung mit den Merkmalen des Patentanspruchs 1, einen Antriebsstrang mit den Merkmalen des Patentanspruchs 5 und ein Verfahren mit den Merkmalen des Patentanspruchs 6.

Vorteile der Erfindung

Die Steuervorrichtung nutzt eine Minimierungsstrategie. Dabei kann die Bewertungsfunktion z.B. eine Funktion sein, welche für eine gegebene Drehzahl und ein gegebenes Drehmoment der Antriebe die Verbräuche der jeweiligen Antriebe auf einen Bewertungswert abbildet, der minimiert werden soll. Das Verhältnis der von jeder der Antriebseinheiten aufgebrachten Drehmomente und die Änderung dieses Verhältnisses kann auch als Betriebsstrategie des Antriebssystems bezeichnet werden.

Beispielsweise kann eine Betriebsstrategie vorsehen, dass eine Beschleunigung eines PKW aus dem Stand heraus mit einem Elektromotor durchgeführt wird, der auch bei geringen Drehzahlen ein hohes Drehmoment aufweist. Ab einer gewissen Geschwindigkeit kann z.B. ein Verbrennungsmotor zugeschaltet werden, der ein Gleiten bei konstanter Geschwindigkeit unterstützt. Weitere Betrachtungen bei der Wahl der Betriebsstrategie können z.B. der Ladezustand einer Batterie des Elektromotors, eine Temperatur der Motoren und dergleichen sein. Das Ziel der Betriebsstrategie ist es dabei immer, für ein von einem Fahrer gewünschtes Drehmoment die effizienteste Verteilung der Drehmomente zwischen den Antriebseinheiten zu finden. Also die Verteilung, die den geringsten Kraftstoff- oder Energieverbrauch ermöglicht.

Ein Fahrzeug mit einem erfindungsgemäßen Antriebsstrang kann z.B. ein Hybridfahrzeug sein, welches einen herkömmlichen Verbrennungsmotor und einen Elektromotor aufweist. Diese können üblicherweise mit einem steuerbaren Drehmoment-Verhältnis gemeinsam das Fahrzeug antreiben.

Hat die Steuervorrichtung eine Verteilung der Drehmomente zwischen den Antriebseinheiten bestimmt, kann sie diese selbstverständlich entsprechend ansteuern. Dabei kann die Steuervorrichtung die Antriebseinheiten selbst also direkt ansteuern. Alternativ kann die Steuervorrichtung Informationen über die Verteilung der Drehmomente zwischen den Antriebseinheiten aber auch an weitere Steuereinheiten, z.B. dedizierte Motorsteuergeräte, übertragen.

Eine mögliche, beispielhafte Formel für die Bewertungsfunktion lautet:

$$H(n) = s * P_{Batt}(n) + H_u * \dot{m}_{Fuel,ICE}(n)$$

Die Nebenbedingung kann formuliert werden als:

$$T_{ICE} + T_{EM} = T_{drv,des}$$

Dabei steht $T_{ICE}$ für das Drehmoment des Verbrennungsmotors, $T_{EM}$ für das Drehmoment des Elektromotors und $T_{drv,des}$ für das durch den Fahrer vorgegebene Solldrehmoment. Die Summe aus dem Drehmoment des Verbrennungsmotors und dem Drehmoment des Elektromotors muss folglich dem von dem Fahrer gewünschten Drehmoment entsprechen. H(n) steht für das Ergebnis der Bewertungsfunktion, welches es zu minimiere gilt. $P_{Batt}(n)$ steht für die aus der Batterie bei einer vorgegebenen Drehzahl n durch einen Elektromotor entnommene Leistung. Diese wird mit einem Äquivalenz-Faktor s multipliziert, der die elektrische Leistung einem Kraftstoffverbrauch eines entsprechenden Verbrennungsmotors gleichstellt. Der Term $\dot{m}_{Fuel,ICE}(n)$ steht für einen Kraftstofffluss oder Massefluss des Kraftstoffs bei einer vorgegebenen Drehzahl und $H_u$ steht für den Energiegehalt des Kraftstoffs. Bei der Minimierung von H(n) ist eine Drehzahl durch den Fahrer vorgegeben und insbesondere die Terme PBatt(n) und $\dot{m}_{Fuel,ICE}(n)$ können drehmomentabhängig bereitgestellt werden.

Insbesondere bei der Kombination eines Elektromotors mit einem Verbrennungsmotor, z.B. einem Dieselmotor, in einem PKW kann eine Bewertungsfunktion bzw. die Ausgangskurve einer solchen über weite Drehzahlbereiche bzw. Drehmomentbereiche sehr flach verlaufen und für unterschiedliche Drehmomente mehrere nahe beieinander liegende lokale Minima aufweisen. Dies kann zu Oszillationen zwischen zwei oder mehreren der nahe beieinander liegenden Minima führen. Um ein und dasselbe Ausgangsdrehmoment zu erzeugen, wird die Drehmomentverteilung zwischen dem Elektromotor und dem Dieselmotor also zwischen zwei oder mehr im Ergebnis äquivalenten Verteilungen permanent umgeschaltet. Dieses Umschalten kann in dem PKW aber z.B. zu spürbaren Vibrationen führen.

Um dies zu vermeiden, wird der Malus-Term eingeführt, der die Bewertungsfunktion um einen Term erweitert, der eine Veränderung des SollDrehmoments bzw. der Soll-Last einer der mindestens zwei Antriebseinheiten mit einem Bewertungsmalus belegt. Das bedeutet, dass eine Veränderung des SollDrehmoments einer der Antriebseinheiten sich in dem Ergebnis der Bewertungsfunktion negativ also erhöhend niederschlägt.

Die Bewertungsfunktion mit dem Malus-Term kann dargestellt werden als:

$$H(n) = s * P_{Batt}(n) + H_u * \dot{m}_{Fuel,ICE}(n) + TM(T)$$

wobei TM(T) für den Malus-Term steht, der von dem Drehmoment einer der Antriebseinheiten abhängig ist.

Da das Ziel in der Minimierung der Bewertungsfunktion besteht, wird ein neues Minimum bei einer Änderung der Verteilung des Drehmoments zwischen den Antriebseinheiten nur dann gefunden, wenn sich Einsparungen ergeben, die den Bewertungsmalus übersteigen. Wie oben bereits erläutert, finden die Sprünge zwischen zwei nahe beieinander liegenden lokalen Minima statt, weil die Kurve der Bewertungsfunktion sehr flach verläuft. Dies bedeutet aber auch, dass sich bei kleinen Änderungen der Verteilung, z.B. zwischen zwei der lokalen Minima, kaum Einsparungen ergeben und der Malus-Term ein oszillierendes Umschalten verhindert.

Vorteilhafte Ausführungsformen und Weiterbildungen ergeben sich aus den Unteransprüchen sowie aus der Beschreibung unter Bezugnahme auf die Figuren.

Der Malus-Term kann den Absolutwert einer Differenz aus einem in einem aktuellen Berechnungszyklus für eine der Antriebseinheiten berechneten Drehmoment und einem in einem vorhergehenden Berechnungszyklus für die jeweilige Antriebseinheit berechneten Drehmoment aufweisen. Der Malus-Term kann alternativ das Quadrat einer Differenz aus einem in einem aktuellen Berechnungszyklus für eine der Antriebseinheiten berechneten Drehmoment und einem in einem vorhergehenden Berechnungszyklus für die jeweilige Antriebseinheit berechneten Drehmoment aufweisen. Bei dem bereits erwähnten Umschalten zwischen zwei äquivalenten Drehmomentverteilungen ändert sich u.U. das Ergebnis der Bewertungsfunktion nur in sehr geringem Umfang. Die Drehmomente der Antriebseinheiten verändern sich aber deutlich. Daher kann ein Malus-Term, der auf der Veränderung der Drehmomente basiert effektiv ein solches Umschalten verhindern.

Der Malus-Term TM kann z.B. ausgebildet sein als:

$$TM(T) = abs(T_k - T_{k-1})$$

oder als:

$$TM(T) = w*(T_k - T_{k-1})^2$$

wobei $T_k$ für das in dem aktuellen Berechnungszyklus berechnete Drehmoment und $T_{k-1}$ für das in dem vorherigen Berechnungszyklus berechnete Drehmoment steht. Der Faktor w kann ein Gewichtungsfaktor sein, mit dem der Einfluss des Malus-Terms eingestellt werden kann.

Der Malus-Term kann einen vorgegebenen Maximalwert aufweisen der den Bewertungsmalus begrenzt. Dies ermöglicht es, eine Schwelle festzulegen, ab welcher ein Wechsel zwischen zwei Drehmomentverteilungen der Antriebseinheiten durchgeführt wird. Es kann z.B. für jede Kombination von Antriebseinheiten ein eigener Maximalwert berechnet oder experimentell bestimmt werden. Ein solcher Schwellwert muss einerseits sicherstellen, dass es nicht zu Oszillationen im Antriebsstrang z.B. eines PKW kommt. Andererseits muss der Schwellwert so niedrig gewählt sein, dass die Effizienz des Antriebsstrangs nicht negativ beeinflusst wird, z.B. weil ein Umschalten zwischen zwei Drehmomentverteilungen dauerhaft verhindert wird.

Ein solcher Malus-Term kann ausgebildet sein als:

$$TM(T) = \max(T_{lim}, \, abs(T_k - T_{k-1}))$$

oder als:

$$TM(T) = \max(T_{lim}^2, \, w^*(T_k - T_{k-1})^2)$$

Übersteigt der Malus also den Maximalwert $T_{lim}$ erhöht sich der Wert des Malus-Terms nicht weiter.

In einer Ausführungsform kann die Recheneinrichtung ausgebildet sein, Betriebsgrößen der Antriebseinheiten zu überwachen und einen neuen Berechnungszyklus nur dann auszuführen, wenn mindestens eine der Betriebsgrößen sich um einen vorgegebenen Schwellwert ändert. Beispielsweise kann die Recheneinrichtung einen Speicher aufweisen und in jedem Berechnungszyklus die aktuellen Werte der Betriebsgrößen speichern. Nach einem Berechnungszyklus überwacht die Recheneinrichtung dann lediglich die Änderungen der Betriebsgrößen. Ein neuer Berechnungszyklus wird lediglich dann angestoßen, wenn die Änderung einer Betriebsgröße über einem gewissen Schwellwert liegt. So können häufige Neuberechnungen der Betriebsstrategie vermieden werden und hochfrequente zyklische oder oszillierende Sprünge zwischen Drehmomentverteilungen können vermieden oder reduziert werden.

In einer Ausführungsform kann die Recheneinrichtung ausgebildet sein, als Betriebsgrößen ein gewünschtes Drehmoment und/oder ein von den Antriebseinheiten maximal und/oder minimal aufbringbares Drehmoment und/oder Drehzahlen der Antriebseinheiten zu erfassen. Dies ermöglicht es die Antriebseinheiten und den Antriebsstrang, in welchem diese eingesetzt werden, sehr detailliert zu überwachen und sich ändernde Bedingungen zu erfassen.

Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:

Fig. 1 ein Blockschaltbild einer Ausführungsform einer erfindungsgemäßen Steuervorrichtung,

Fig. 2 ein Blockschaltbild einer Ausführungsform eines erfindungsgemäßen Antriebsstrangs,

Fig. 3 ein Ablaufdiagramm einer Ausführungsform eines erfindungsgemäßen Verfahrens,

Fig. 4 ein Ablaufdiagramm einer weiteren Ausführungsform eines erfindungsgemäßen Verfahrens,

Fig. 5 ein Diagramm für eine Ausführungsform einer beispielhaften Bewertungsfunktion, und

Fig. 6 ein Diagramm für eine Ausführungsform eines beispielhaften Malus-Terms.

In allen Figuren sind gleiche bzw. funktionsgleiche Elemente und Vorrichtungen - sofern nichts Anderes angegeben ist - mit denselben Bezugszeichen versehen worden.

Ausführungsformen der Erfindung

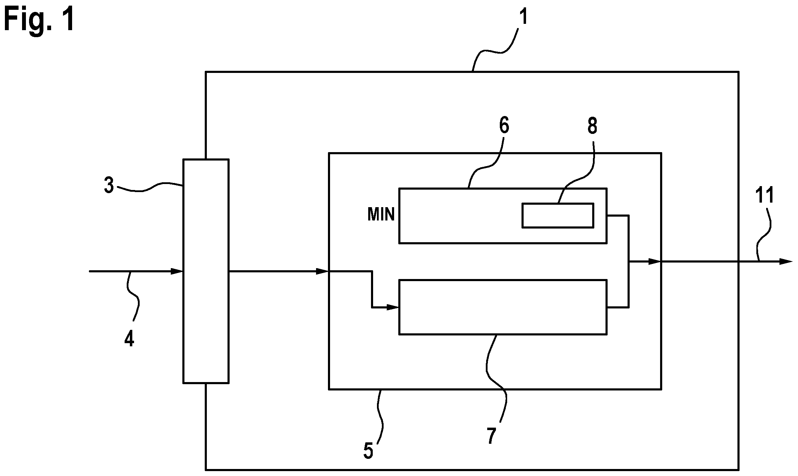

Fig. 1 zeigt ein Blockschaltbild einer Ausführungsform einer erfindungsgemäßen Steuervorrichtung 1 mit einer Schnittstelle 3, über welcher die Steuervorrichtung 1 ein Solldrehmoment 4 erhält. Das Solldrehmoment 4 kann z.B. aus einer Fahrpedalstellung abgeleitet werden, die ein Fahrer in einem Fahrzeug mit seinem Fuß einstellt. Das Solldrehmoment 4 kann aber z.B. auch von anderen Fahrzeugsystemen, wie z.B. einem Tempomaten oder dergleichen, bereitgestellt werden. Die Schnittstelle 3 kann dabei jede Art von Schnittstelle sein, die die Übertragung des Solldrehmoments als analogen oder digitalen Wert erlaubt. Insbesondere kann die Schnittstelle 3 als eine Bus-Schnittstelle 3, z.B. eine CAN-Schnittstelle oder eine FlexRay-Schnittstelle oder dergleichen, ausgebildet sein.

In der Steuervorrichtung 1 verarbeitet eine Recheneinrichtung 5 das Solldrehmoment 4 indem es dieses als Randbedingung für die Minimierung MIN der Bewertungsfunktion 6 mit dem Malus-Term 8 nutzt. Die Bewertungsfunktion 6 bildet, wie oben bereits erwähnt, eine konkrete Leistungsverteilung zwischen den Antriebseinheiten auf einen Wert ab, der eine Aussage über die Effizienz der entsprechenden Leistungsverteilung erlaubt und kann z.B. wie folgt ausgebildet sein:

$$H(n) = s * P_{Batt}(n) + H_u * \dot{m}_{Fuel,ICE}(n) + \max(T_{lim}^2, w*(T_k - T_{k-1})^2)$$

wobei der Term $\max(T_{lim}^2, w*(T_k - T_{k-1})^2)$ den Malus-Term 8 darstellt. $T_{lim}$ stellt einen Maximalwert 9 für den Malus-Term dar. Diesen kann der Malus-Term also nicht überschreiten.

Die oben gezeigte Formel liefert als H(n) einen Wert, der die Effizienz einer Leistungs- oder Lastverteilung zwischen einem Elektromotor und einem Verbrennungsmotor kennzeichnet. Wird dieser Wert minimal, arbeiten Elektromotor und Verbrennungsmotor in Kombination für die jeweilige Lastsituation optimal, also am effizientesten.

Die Recheneinrichtung 5 kann die berechnete Last- oder Drehmomentverteilung 11 direkt an die jeweiligen Antriebseinheiten, also z.B. einen Elektromotor und einen Verbrennungsmotor, ausgeben, um diese anzusteuern. Alternativ kann die Recheneinrichtung 5 diese Informationen z.B. auch an ein übergeordnetes Antriebssteuergerät übergeben, welches die eigentliche Ansteuerung der Antriebseinheiten übernimmt. Die Ausgabe der Lastverteilung 11 kann selbstverständlich auch über die Schnittstelle 3 erfolgen.

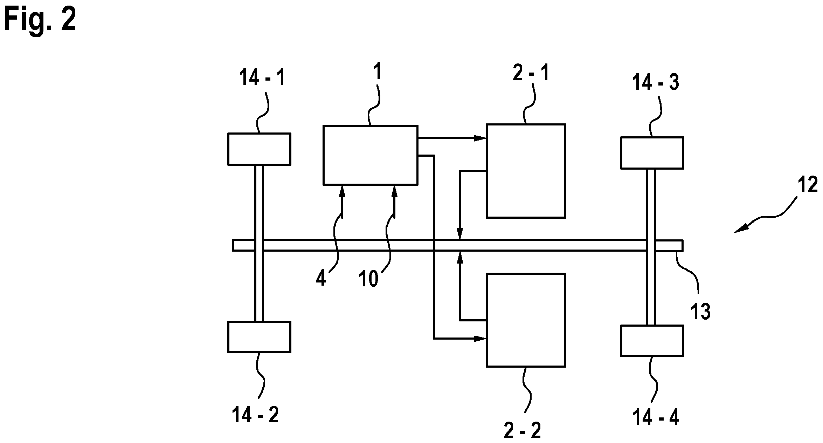

Fig. 2 zeigt ein Blockschaltbild einer Ausführungsform eines erfindungsgemäßen Antriebsstrangs 12.

Der Antriebsstrang 12 weist einen Elektromotor 2-1 und einen Verbrennungsmotor 2-2 auf, die beide mit einer Antriebswelle 13 und darüber mit den Rädern 14-1 bis 14-4 des Antriebsstrangs 12 gekoppelt sind. Da der Elektromotor 2-1 und der Verbrennungsmotor 2-2 parallel mit der Antriebswelle 13 gekoppelt sind, handelt es sich um einen sog. "parallel-Hybriden". Alternativ könnten der Elektromotor 2-1 und der Verbrennungsmotor 2-2 auch mechanisch in Serie angeordnet sein.

Die Steuervorrichtung 1 nimmt in Fig. 2 zusätzlich zu dem Solldrehmoment noch weitere Betriebsgrößen 10 des Antriebsstrangs 12 auf. Diese Betriebsgrößen 10 können z.B. ein gewünschtes Drehmoment, ein von dem Elektromotor 2-1 und dem Verbrennungsmotor 2-2 maximal bzw. minimal aufbringbares Drehmoment, oder die Drehzahlen des Elektromotors 2-1 und des Verbrennungsmotors 2-2 sein.

Die Steuervorrichtung 1 hat im Vergleich mit Figur 1 eine erweiterte Funktion. Hat die Steuervorrichtung 1 eine Lastverteilung 11 berechnet, berechnet sie nicht sofort eine neue Lastverteilung 11. Vielmehr beobachtet die Steuervorrichtung 1 die Betriebsgrößen 10 und berechnet lediglich dann eine neue Lastverteilung 11 für den Elektromotor 2-1 und den Verbrennungsmotor 2-2, wenn sich die Betriebsgrößen um einen gewissen Schwellwert ändern. Dieser Schwellwert kann je nach Betriebsgröße als absoluter oder prozentualer Wert angegeben werden. Beispielsweise kann in einer Ausführungsform die Steuervorrichtung 1 eine neue Lastverteilung 11 für den Elektromotor 2-1 und den Verbrennungsmotor 2-2 berechnen, wenn sich das Solldrehmoment um mehr als 1%, 5%, 10% oder einem Wert zwischen den anderen Werten verändert hat.

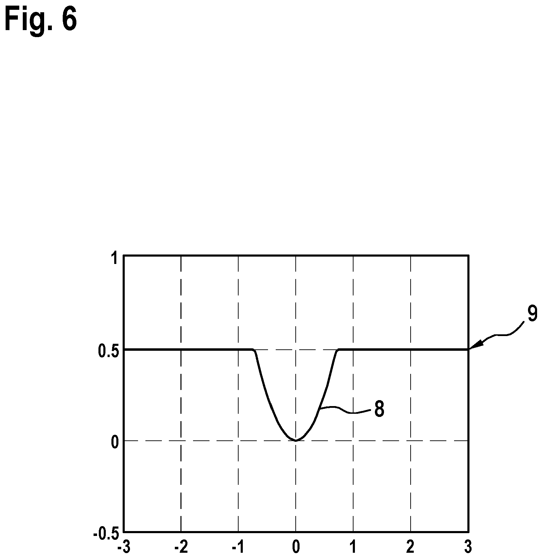

Bei der Minimierung der Bewertungsfunktion 6 ist die Recheneinrichtung 1 in Fig. 2 ferner dazu ausgebildet, den Malus-Term auf einen Maximalwert 9 zu begrenzen. Folglich kann der Malus-Term in keinem Fall über den Maximalwert 9 ansteigen. Die Auswirkungen dieser Begrenzung werden in Zusammenhang mit Fig. 6 näher erläutert.

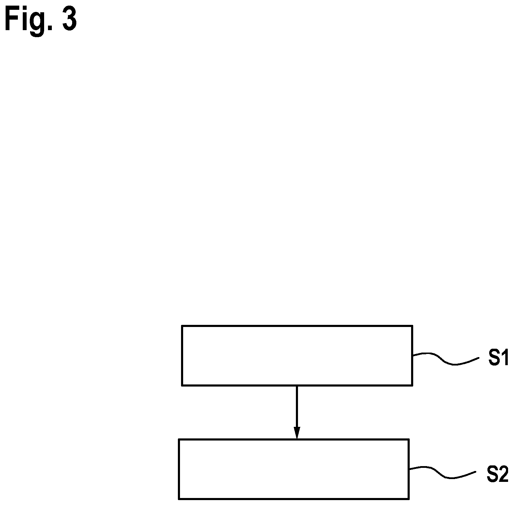

Fig. 3 zeigt ein Ablaufdiagramm einer Ausführungsform eines erfindungsgemäßen Verfahrens zum Steuern eines Fahrzeugs mit mindestens zwei Antriebseinheiten 2-1, 2-2.

Das Verfahren beginnt mit dem Aufnehmen S1 des Solldrehmoments 4. Zur Bestimmung der Drehmomentverteilung 11 wird eine zyklisch eine Bewertungsfunktion 6 für den Betrieb der mindestens zwei Antriebseinheiten 2-1, 2-2 minimiert. Dabei ist eine Randbedingung 7 der Bewertungsfunktion 6 die Erzeugung des Solldrehmoments 4 ist. Wie bereits oben erwähnt, weist die Bewertungsfunktion 6 einen Malus-Term 8 auf, welcher eine Veränderung des Drehmoments einer der mindestens zwei Antriebseinheiten 2-1, 2-2 mit einem Bewertungsmalus belegt.

Unterschiedliche Ausführungen des Malus-Terms 8 können in dem Verfahren genutzt werden. Beispielsweise kann der Malus-Term 8 den Absolutwert einer Differenz aus einem in einem aktuellen Berechnungszyklus für eine der Antriebseinheiten 2-1, 2-2 berechneten Drehmoment und einem in einem vorhergehenden Berechnungszyklus für die jeweilige Antriebseinheit 2-1, 2-2 berechneten Drehmoment aufweisen. Alternativ kann der Malus-Term 8 das Quadrat einer Differenz aus einem in einem aktuellen Berechnungszyklus für eine der Antriebseinheiten 2-1, 2-2 berechneten Drehmoment und einem in einem vorhergehenden Berechnungszyklus für die jeweilige Antriebseinheit 2-1, 2-2 berechneten Drehmoment aufweisen. Schließlich kann der Malus-Term 8 einen vorgegebenen Maximalwert 9 aufweisen, der den Bewertungsmalus begrenzt.

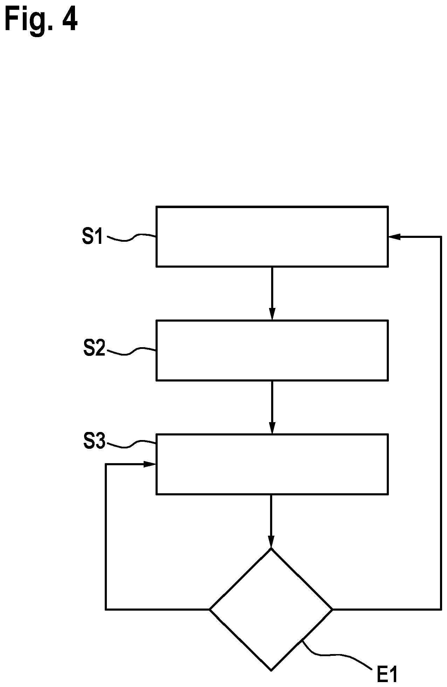

Fig. 4 zeigt ein Ablaufdiagramm einer weiteren Ausführungsform eines erfindungsgemäßen Verfahrens, welches das Verfahren der Fig. 3 ergänzt bzw. erweitert.

Nach der Minimierung der Bewertungsfunktion 6 und der damit verbundenen Berechnung der Lastverteilung 11 sieht das Verfahren der Fig. 3 vor, dass Betriebsgrößen 10 der Antriebseinheiten 2-1, 2-2 überwacht werden S3 und ein neuer Berechnungszyklus nur dann ausgeführt wird, wenn mindestens eine der Betriebsgrößen 10 sich um einen vorgegebenen Schwellwert ändert. Dies ist in Fig. 3 durch den Entscheidungsblock E1 dargestellt, der zurück zu Schritt S3 führt, wenn sich die Betriebsgrößen 10 nicht mindestens um den vorgegebenen Schwellwert geändert haben. Liegt eine Änderung vor, deren Größe über dem vorgegebenen Schwellwert liegt, beginnt das Verfahren wieder bei Schritt S1.

Als Betriebsgrößen 10 können dabei z.B. ein gewünschtes Drehmoment und/oder ein von den Antriebseinheiten 2-1, 2-2 maximal und/oder minimal aufbringbares Drehmoment und/oder Drehzahlen der Antriebseinheiten 2-1, 2-2 erfasst werden.

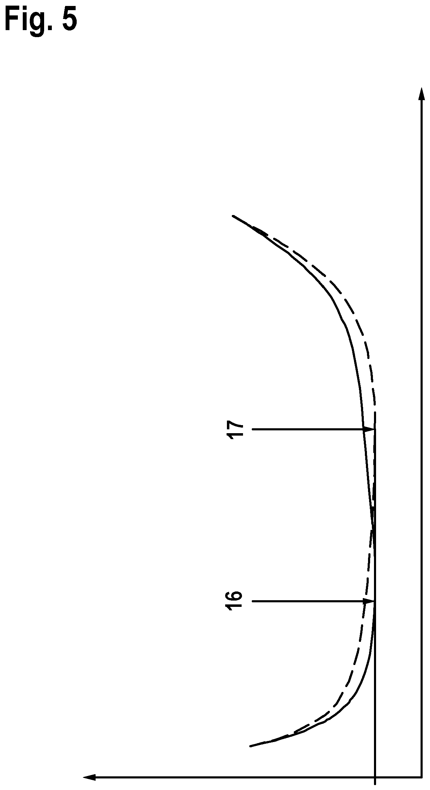

Fig. 5 zeigt ein Diagramm für eine Ausführungsform einer beispielhaften Bewertungsfunktion. Die Ordinatenachse des Diagramms zeigt den Wert der Bewertungsfunktion, also H(n), während die Abszissenachse das Drehmoment einer der Antriebseinheiten zeigt. Auf eine Darstellung von Maßzahlen wurde verzichtet, da diese für das Verständnis des Prinzips der vorliegenden Erfindung nicht relevant sind und für unterschiedliche Antriebseinheiten unterschiedliche ausfallen würden.

Das Diagramm zeigt zwei Kurven für unterschiedliche angeforderte Drehzahlen. Die Kurven in dem Diagramm verlaufen in etwa wannenförmig und weisen einen breiten Mittenbereich auf, in welchem sie annähernd horizontal verlaufen. Die Kurven verlaufen dabei nicht exakt horizontal sondern weisem jeweils lokale Minima 16 und 17 auf. Es ist deutlich zu erkennen, dass die Minima 16 und 17 zu dem annähernd gleichen Ergebnis der Bewertungsfunktion führen. Die entsprechenden Lastverteilungen 11 weisen also die gleiche Effizienz auf. Der Abstand der zwei Minima in Bezug auf die Abszissenachse ist dabei so klein, dass ein Wechsel zwischen den zwei Minima 16 und 17 bereits dann auftreten könnte, wenn z.B. der Fahrer eines Fahrzeugs das Gaspedal annähernd konstant hält und sehr leicht variiert.

Mit Hilfe der vorliegenden Erfindung wird es möglich, ein Oszillieren zwischen den Minima 16 und 17 zu vermeiden. Für den Fahrer eines Fahrzeugs spürbare Oszillationen können dadurch vermieden werden.

Fig. 6 zeigt ein Diagramm für eine Ausführungsform eines beispielhaften Malus-Terms 8. Die Ordinatenachse der Fig. 6 kennzeichnet den Absolutwert des Malus-Terms 8 und die Abszissenachse kennzeichnet das Quadrat der Differenz aus einem in einem aktuellen Berechnungszyklus für eine der Antriebseinheiten 2-1, 2-2 berechneten Drehmoment und einem in einem vorhergehenden Berechnungszyklus für die jeweilige Antriebseinheit 2-1, 2-2 berechneten Drehmoment. Es ist in Fig. 6 ferner zu erkennen, dass der Malus-Term 8 einen Maximalwert 9 von 0.5 aufweist. Der Malus-Term ist also begrenzt auf diesen Maximalwert 9 und kann keinen größeren Wert annehmen.

Durch die Vorgabe des Maximalwerts 9 kann ein Intervall vorgegeben werden, in welchem der Malus-Term 8 wirksam ist. Für Differenzen, die außerhalb dieses Intervalls liegen, hier ca. +/- 0,75, weist der Malus-Term immer den gleichen Betrag auf. Er wirkt also auf alle Differenzen außerhalb des Intervalls gleich. Findet die Recheneinrichtung 5 also z.B. zwei Minimalwerte für die Bewertungsfunktion 6 bei Drehmoment-Differenzen von -1 und -2 zu dem vorherigen Berechnungszyklus, sind die Wert der Bewertungsfunktion unabhängig von dem Malus-Term miteinander vergleichbar, da dieser mit exakt dem gleichen Betrag in beide Werte eingeht.

**Patentansprüche**

1. Steuervorrichtung (1) für ein Fahrzeug mit mindestens zwei Antriebseinheiten (2-1, 2-2),

   mit einer Schnittstelle (3), welche ausgebildet ist, ein Solldrehmoment (4) aufzunehmen, und

   mit einer Recheneinrichtung (5), welche ausgebildet ist, zyklisch eine Bewertungsfunktion (6) für den Betrieb der mindestens zwei Antriebseinheiten (2-1, 2-2) zu minimieren, um eine Drehmomentverteilung (11) zwischen den mindestens zwei Antriebseinheiten (2-1, 2-2) zu bestimmen, wobei eine Randbedingung (7) der Bewertungsfunktion (6) die Erzeugung des Solldrehmoments (4) ist und wobei die Bewertungsfunktion eine Funktion ist, die für eine vorgegebene Drehzahl und ein vorgegebenes Drehmoment der Antriebseinheiten (2-1, 2-2) die Verbräuche der jeweiligen Antriebseinheiten (2-1, 2-2) auf einen Bewertungswert abbildet,

   wobei die Bewertungsfunktion (6) einen Malus-Term (8) aufweist, welcher eine Veränderung des Drehmoments einer der mindestens zwei Antriebseinheiten (2-1, 2-2) mit einem Bewertungsmalus belegt, so dass eine Veränderung des SollDrehmoments einer Antriebseinheit (2-1, 2-2) sich in dem Ergebnis der Bewertungsfunktion erhöhend niederschlägt,

   **dadurch gekennzeichnet, dass**

   der Malus-Term (8) den Absolutwert einer Differenz aus einem in einem aktuellen Berechnungszyklus für eine der Antriebseinheiten (2-1, 2-2) berechneten Drehmoment und einem in einem vorhergehenden Berechnungszyklus für die jeweilige Antriebseinheit (2-1, 2-2) berechneten Drehmoment aufweist, oder

der Malus-Term (8) das Quadrat einer Differenz aus einem in einem aktuellen Berechnungszyklus für eine der Antriebseinheiten (2-1, 2-2) berechneten Drehmoment und einem in einem vorhergehenden Berechnungszyklus für die jeweilige Antriebseinheit (2-1, 2-2) berechneten Drehmoment aufweist.

**2.** Steuervorrichtung (1) nach Anspruch 1, wobei der Malus-Term (8) einen vorgegebenen Maximalwert (9) aufweist, der den Bewertungsmalus begrenzt.

**3.** Steuervorrichtung (1) nach einem der vorherigen Ansprüche, wobei die Recheneinrichtung (5) ausgebildet ist, Betriebsgrößen (10) der Antriebseinheiten (2-1, 2-2) zu überwachen und einen neuen Berechnungszyklus nur dann auszuführen, wenn mindestens eine der Betriebsgrößen (10) sich um einen vorgegebenen Schwellwert ändert.

**4.** Steuervorrichtung (1) nach Anspruch 3, wobei die Recheneinrichtung (5) ausgebildet ist, als Betriebsgrößen (10) ein gewünschtes Drehmoment und/oder ein von den Antriebseinheiten (2-1, 2-2) maximal und/oder minimal aufbringbares Drehmoment und/oder Drehzahlen der Antriebseinheiten (2-1, 2-2) zu erfassen.

**5.** Antriebsstrang (12) für ein Fahrzeug,
mit mindestens zwei Antriebseinheiten (2-1, 2-2), und
mit einer Steuervorrichtung (1) nach einem der vorherigen Ansprüche, welche mit den mindestens zwei Antriebseinheiten (2-1, 2-2) gekoppelt ist und ausgebildet ist, diese anzusteuern.

**6.** Verfahren zum Steuern eines Fahrzeugs mit mindestens zwei Antriebseinheiten (2-1, 2-2), aufweisend die Schritte:

Aufnehmen (S1) eines Solldrehmoments (4),
zyklisches Minimieren (S2) einer Bewertungsfunktion (6) für den Betrieb der mindestens zwei Antriebseinheiten (2-1, 2-2), zum Bestimmen einer Drehmomentverteilung (11) zwischen den mindestens zwei Antriebseinheiten (2-1, 2-2), wobei eine Randbedingung (7) der Bewertungsfunktion (6) die Erzeugung des Solldrehmoments (4) ist und wobei die Bewertungsfunktion eine Funktion ist, die für eine vorgegebene Drehzahl und ein vorgegebenes Drehmoment der Antriebseinheiten (2-1, 2-2) die Verbräuche der jeweiligen Antriebseinheiten (2-1, 2-2) auf einen Bewertungswert abbildet,
wobei die Bewertungsfunktion (6) einen Malus-Term (8) aufweist, welcher eine Veränderung des Drehmoments einer der mindestens zwei Antriebseinheiten (2-1, 2-2) mit einem Bewertungsmalus belegt, so dass eine Veränderung des SollDrehmoments einer Antriebseinheit (2-1, 2-2) sich in dem Ergebnis der Bewertungsfunktion erhöhend niederschlägt,
**dadurch gekennzeichnet, dass**
der Malus-Term (8) den Absolutwert einer Differenz aus einem in einem aktuellen Berechnungszyklus für eine der Antriebseinheiten (2-1, 2-2) berechneten Drehmoment und einem in einem vorhergehenden Berechnungszyklus für die jeweilige Antriebseinheit (2-1, 2-2) berechneten Drehmoment aufweist, oder
der Malus-Term (8) das Quadrat einer Differenz aus einem in einem aktuellen Berechnungszyklus für eine der Antriebseinheiten (2-1, 2-2) berechneten Drehmoment und einem in einem vorhergehenden Berechnungszyklus für die jeweilige Antriebseinheit (2-1, 2-2) berechneten Drehmoment aufweist.

**7.** Verfahren nach Anspruch 6, wobei der Malus-Term (8) einen vorgegebenen Maximalwert (9) aufweist, der den Bewertungsmalus begrenzt.

**8.** Verfahren nach Anspruch 6 oder 7, wobei Betriebsgrößen (10) der Antriebseinheiten (2-1, 2-2) überwacht werden (S3) und ein neuer Berechnungszyklus nur dann ausgeführt wird, wenn mindestens eine der Betriebsgrößen (10) sich um einen vorgegebenen Schwellwert ändert.

**9.** Verfahren nach Anspruch 8, wobei als Betriebsgrößen (10) ein gewünschtes Drehmoment und/oder ein von den Antriebseinheiten (2-1, 2-2) maximal und/oder minimal aufbringbares Drehmoment und/oder Drehzahlen der Antriebseinheiten (2-1, 2-2) erfasst werden.

**Claims**

**1.** Control device (1) for a vehicle having at least two drive units (2-1, 2-2),
having an interface (3) which is designed to receive a setpoint torque (4), and
having a computing device (5) which is designed to minimize cyclically an evaluation function (6) for the operation of the at least two drive units (2-1, 2-2), in order to determine a torque distribution (11) between the at least two drive units (2-1, 2-2), wherein a boundary condition (7) of the evaluation function (6) is the generation of the setpoint torque (4), and wherein the evaluation function is a function which maps the consumption values of the respective drive units (2-1, 2-2) onto an evaluation value for a specified rotational speed and a specified torque of the drive units (2-1, 2-2),

wherein the evaluation function - (6) has a Malus term (8) which applies an evaluation Malus to a change in the torque of one of the at least two drive units (2-1, 2-2), so that a change in the setpoint torque of a drive unit (2-1, 2-2) has an effect of increasing the result of the evaluation function,

**characterized in that**

the Malus term (8) has the absolute value of a difference formed from a torque which is calculated in a current calculation cycle for one of the drive units (2-1, 2-2) and a torque which is calculated in a preceding calculation cycle for the respective drive unit (2-1, 2-2), or

the Malus term (8) has the square of a difference formed from a torque calculated in a current calculation cycle for one of the drive units (2-1, 2-2) and a torque calculated in a preceding calculation cycle for the respective drive unit (2-1, 2-2).

2. Control device (1) according to Claim 1, wherein the Malus term (8) has a specified maximum value (9) which bounds the evaluation Malus.

3. Control device (1) according to one of the preceding claims, wherein the computing device (5) is designed to monitor operating variables (10) of the drive units (2-1, 2-2) and execute a new calculation cycle only if at least one of the operating variables (10) changes by a specified threshold value.

4. Control device (1) according to Claim 3, wherein the computing device (5) is designed to sense, as operating variables (10), a desired torque and/or a torque which is the maximum and/or minimum which can be applied by the drive units (2-1, 2-2) and/or rotational speeds of the drive units (2-1, 2-2) .

5. Drive train (12) for a vehicle,
having at least two drive units (2-1, 2-2), and having a control device (1) according to one of the preceding claims, which control device (1) is coupled to the at least two drive units (2-1, 2-2) and is designed to actuate them.

6. Method for controlling a vehicle having at least two drive units (2-1, 2-2), having the steps:

receiving (S1) a setpoint torque (4),
cyclically minimizing (S2) an evaluation function (6) for the operation of the at least two drive units (2-1, 2-2) for determining a torque distribution (11) between the at least two drive units (2-1, 2-2), wherein a boundary condition (7) of the evaluation function (6) is the generation of the setpoint torque (4), and wherein the evaluation function is a function which maps the consumption values of the respective drive units (2-1, 2-2) onto an evaluation value for a specified rotational speed and a specified torque of the drive units (2-1, 2-2),
wherein the evaluation function (6) has a Malus term (8) which applies an evaluation Malus to a change in the torque of one of the at least two drives units (2-1, 2-2), so that a change in the setpoint torque of a drive unit (2-1, 2-2) has the effect of increasing the result of the evaluation function,
**characterized in that**
the Malus term (8) has the absolute value of a difference formed from a torque calculated in a current calculation cycle for one of the drive units (2-1, 2-2) and a torque calculated in a preceding calculation cycle for the respective drive unit (2-1, 2-2), or
the Malus term (8) has the square of a difference formed from a torque calculated in a current calculation cycle for one of the drive units (2-1, 2-2) and a torque calculated in a preceding calculation cycle for the respective drive unit (2-1, 2-2).

7. Method according to Claim 6, wherein the Malus term (8) has a specified maximum value (9) which bounds the evaluation Malus.

8. Method according to Claim 6 or 7, wherein operating variables (10) of the drive units (2-1, 2-2) are monitored (S3) and a new calculation cycle is executed only if at least one of the operating variables (10) changes by a specified threshold value.

9. Method according to Claim 8, wherein a desired torque and/or a torque which is the maximum and/or minimum which can be applied by the drive units (2-1, 2-2) and/or rotational speeds of the drive units (2-1, 2-2) are sensed as operating variables (10) .

**Revendications**

1. Dispositif de commande (1) pour un véhicule comprenant au moins deux unités de propulsion (2-1, 2-2), comprenant une interface (3) qui est configurée pour recevoir un couple de consigne (4) et comprenant un dispositif de calcul (5) qui est configuré pour réduire cycliquement au minimum une fonction d'évaluation (6) pour le fonctionnement des au moins deux unités de propulsion (2-1, 2-2) afin de déterminer une distribution de couple (11) entre les au moins deux unités de propulsion (2-1, 2-2), une condition aux limites (7) de la fonction d'évaluation (6) étant la génération du couple de consigne (4) et la fonction d'évaluation étant une fonction qui, pour une vitesse de rotation prédéfinie et un couple prédéfini des unités de propulsion (2-1, 2-2), représente les consommations des unités de propulsion (2-1, 2-2) respectives sur une valeur d'évaluation, la fonction d'évaluation (6) possédant un terme de malus (8) qui pénalise une modification du couple de l'une des au moins deux unités de propulsion (2-1, 2-2) avec un malus d'évaluation, de sorte qu'une modification du couple de consigne d'une unité de propulsion (2-1, 2-2) chute de manière accrue dans le résultat de la fonction d'évaluation, **caractérisé en ce que** le terme de malus (8) présente la valeur absolue d'une différence entre un couple calculé dans un cycle de calcul actuel pour l'une des unités de propulsion (2-1, 2-2) et un couple calculé dans un cycle de calcul précédent pour l'unité de propulsion (2-1, 2-2) respective, ou le terme de malus (8) présente le carré d'une différence entre un couple calculé dans un cycle de calcul actuel pour l'une des unités de propulsion (2-1, 2-2) et un couple calculé dans un cycle de calcul précédent pour l'unité de propulsion (2-1, 2-2) respective.

2. Dispositif de commande (1) selon la revendication 1, le terme de malus (8) présentant une valeur maximale (9) prédéfinie qui limite le malus d'évaluation.

3. Dispositif de commande (1) selon l'une des revendications précédentes, le dispositif de calcul (5) étant configuré pour surveiller des grandeurs opérationnelles (10) des unités de propulsion (2-1, 2-2) et n'exécuter un nouveau cycle de calcul que lorsqu'au moins l'une des grandeurs opérationnelles (10) varie d'une valeur de seuil prédéfinie.

4. Dispositif de commande (1) selon la revendication 3, le dispositif de calcul (5) étant conçu pour acquérir en tant que grandeurs opérationnelles (10) un couple souhaité et/ou un couple maximal et/ou minimal pouvant être appliqué par les unités de propulsion (2-1, 2-2) et/ou les vitesses de rotation des unités de propulsion (2-1, 2-2).

5. Ensemble motopropulseur (12) pour un véhicule, comprenant au moins deux unités de propulsion (2-1, 2-2) et comprenant un dispositif de commande (1) selon l'une des revendications précédentes, qui est couplé aux au moins deux unités de propulsion (2-1, 2-2) et configuré pour les commander.

6. Procédé pour commander un véhicule comprenant au moins deux unités de propulsion (2-1, 2-2), comprenant les étapes suivantes :

   réception (S1) d'un couple de consigne (4),
   réduction cyclique au minimum (S2) d'une fonction d'évaluation (6) pour le fonctionnement des au moins deux unités de propulsion (2-1, 2-2) afin de déterminer une distribution de couple (11) entre les au moins deux unités de propulsion (2-1, 2-2), une condition aux limites (7) de la fonction d'évaluation (6) étant la génération du couple de consigne (4) et la fonction d'évaluation étant une fonction qui, pour une vitesse de rotation prédéfinie et un couple prédéfini des unités de propulsion (2-1, 2-2), représente les consommations des unités de propulsion (2-1, 2-2) respectives sur une valeur d'évaluation, la fonction d'évaluation (6) possédant un terme de malus (8) qui pénalise une modification du couple de l'une des au moins deux unités de propulsion (2-1, 2-2) avec un malus d'évaluation, de sorte qu'une modification du couple de consigne d'une unité de propulsion (2-1, 2-2) chute de manière accrue dans le résultat de la fonction d'évaluation, **caractérisé en ce que** le terme de malus (8) présente la valeur absolue d'une différence entre un couple calculé dans un cycle de calcul actuel pour l'une des unités de propulsion (2-1, 2-2) et un couple calculé dans un cycle de calcul précédent pour l'unité de propulsion (2-1, 2-2) respective, ou

le terme de malus (8) présente le carré d'une différence entre un couple calculé dans un cycle de calcul actuel pour l'une des unités de propulsion (2-1, 2-2) et un couple calculé dans un cycle de calcul précédent pour l'unité de propulsion (2-1, 2-2) respective.

7. Procédé selon la revendication 6, le terme de malus (8) présentant une valeur maximale (9) prédéfinie qui limite le malus d'évaluation.

8. Procédé selon la revendication 6 ou 7, des grandeurs opérationnelles (10) des unités de propulsion (2-1, 2-2) étant surveillées (S3) et un nouveau cycle de calcul n'étant exécuté que lorsqu'au moins l'une des grandeurs opérationnelles (10) varie d'une valeur de seuil prédéfinie.

9. Procédé selon la revendication 8, les grandeurs opérationnelles (10) acquises étant un couple souhaité et/ou un couple maximal et/ou minimal pouvant être appliqué par les unités de propulsion (2-1, 2-2) et/ou les vitesses de rotation des unités de propulsion (2-1, 2-2) .

**Fig. 1**

Fig. 2

14 - 1

1

2 - 1

14 - 3

4

10

12

13

14 - 2

2 - 2

14 - 4

EP 3 365 210 B1

# Fig. 3

S1

S2

# Fig. 4

# Fig. 5

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012214252 A1
- US 2005246076 A1
- DE 102010008695 A1
- GB 2500944 A